# EUROPEAN PATENT APPLICATION

(11) **EP 4 727 212 A1**
(43) Date of publication of application: **15.04.2026**
(21) Application number: 24842208.1
(22) Date of filing: 04.07.2024
(51) Int. Cl.: H04W 36/00

(54) **HANDOVER METHOD AND COMMUNICATION APPARATUS**

(30) Priority: 14.07.2023 CN 202310872089
(71) Applicant: Huawei Technologies Co., Ltd., Shenzhen, Guangdong 518129 (CN)
(72) Inventor: WANG, Yu, Shenzhen, Guangdong 518129 (CN)
(74) Representative: Goddar, Heinz J.
(86) International application number: PCT/CN2024/103711
(87) International publication number: WO 2025/016213

(57) **Abstract**

This application provides a handover method and a communication apparatus, to improve efficiency and a success rate of handover. The method includes: A terminal device obtains first measurement configuration information and second measurement configuration information, to measure a first-type downlink reference signal based on first position information and the first measurement configuration information; and/or measure a second-type downlink reference signal based on second position information and the second measurement configuration information, to obtain a measurement result. The terminal device determines, based on the measurement result, whether to perform cell handover.

## Description

### CROSS-REFERENCE TO RELATED APPLICATIONS

This application claims priority to Chinese Patent Application No. 202310872089.X, filed with the China National Intellectual Property Administration on July 14, 2023 and entitled "HANDOVER METHOD AND COMMUNICATION APPARATUS", which is incorporated herein by reference in its entirety.

### TECHNICAL FIELD

This application relates to the field of communication technologies, and in particular, to a handover method and a communication apparatus.

### BACKGROUND

With development of satellite networks, the satellite networks generally tend to become ultra-dense and heterogeneous. A scale of a satellite network has increased from 66 satellites of the Iridium satellite constellation to 720 satellites of the OneWeb satellite constellation, and finally to more than 12,000 satellites of the Starlink (Starlink) ultra-dense low earth orbit (low earth orbit, LEO) satellite constellation. In addition, the satellite network is heterogeneous, and has evolved from a conventional single-layer communication network to a multi-layer communication network. The communication satellite network inclines to achieve complex and diversified functions, and is becoming compatible with and supports functions such as navigation enhancement, earth observation, and multi-dimensional information in-orbit processing.

In a beam-hopping satellite system, a satellite performs zone coverage in a time-division manner through beam hopping. Satellite motion triggers group handover of terminal devices in a specific zone (in other words, a plurality of terminal devices in the zone almost simultaneously initiate handover). Current cell handover is designed for handover triggered by terminal device movement, and is not applicable to the group handover caused by the satellite motion.

### SUMMARY

This application provides a handover method and a communication apparatus. A plurality of measurement configurations for cell handover are designed, to adapt to group handover caused by satellite motion or handover or reselection triggered by terminal device movement, so that efficiency and a success rate of the handover/reselection can be improved.

According to a first aspect, an embodiment of this application provides a handover method. The method may be performed by a terminal device. The terminal device herein may be the terminal device, or may be a processor, a module, a chip, a chip system, or the like that implements the method and that is in the terminal device. The method includes: The terminal device obtains first measurement configuration information and second measurement configuration information; and measures a first-type downlink reference signal based on first position information and the first measurement configuration information; and/or measures a second-type downlink reference signal based on second position information and the second measurement configuration information, to obtain a measurement result. The first measurement configuration information is used to configure a transmission resource for the first-type downlink reference signal, the second measurement configuration information is used to configure a transmission resource for the second-type downlink reference signal, and the first-type downlink reference signal and the second-type downlink reference signal are used for cell handover. Further, the terminal device may determine, based on the measurement result, whether to perform cell handover. In the foregoing design, the terminal device measures a plurality of types of downlink reference signals based on a plurality of measurement configurations, to flexibly and quickly determine whether to perform cell handover.

In a possible design, the first-type downlink reference signal is used for cell handover triggered by network device motion, and the second-type downlink reference signal is used for cell handover triggered by the terminal device. In the foregoing design, terminal device group handover caused by the network device (for example, satellite) motion is considered, and a measurement configuration for a downlink reference signal dedicated to the cell handover is configured, so that efficiency and a success rate of the handover can be improved.

In a possible design, the terminal device may measure the first-type downlink reference signal from a target network device based on measurement time that is in the first measurement configuration information and that corresponds to the first position information. For example, the first position information may indicate a beam position of the terminal device. In other words, it may be understood that in this design, the network device may separately configure corresponding measurement time for different beam positions, to reduce measurement interference between the beam positions and improve accuracy of a measurement result.

In a possible design, the first measurement configuration information is used to configure a plurality of transmission resources for the first-type downlink reference signal, and activation time of at least two of the plurality of transmission resources for the first-type downlink reference signal is different. Based on such a design, the terminal device may measure the first-type downlink reference signals on the plurality of transmission resources in a time-division manner.

For example, the plurality of transmission resources for the first-type downlink reference signal include a first transmission resource corresponding to a first cell group and a second transmission resource corresponding to a second cell group. The terminal device may measure, within activation time of the first transmission resource, the first-type downlink reference signal from the first cell group based on measurement time that is in the first transmission resource and that corresponds to the first position information. Alternatively, the terminal device may measure, within activation time of the second transmission resource, the first-type downlink reference signal from the second cell group based on measurement time that is in the second transmission resource and that corresponds to the first position information. Such a design may be applied to a scenario in which the terminal device is cyclically handed over between the first cell group and the second cell group. Measurement configuration needs to be performed only once, to simplify a measurement configuration procedure and mobility management, and improve efficiency of the handover.

In a possible design, the first measurement configuration information is used to configure a first signal quality threshold, and the first signal quality threshold is determined based on an L1/L2 mobility management configuration of the terminal device. If signal quality of the first downlink reference signal included in the measurement result is greater than or equal to the first signal quality threshold, the terminal device may determine to perform cell handover. Such a design is applied to an L1/L2 mobility management scenario, and can reduce communication interruption time caused by satellite motion.

In a possible design, the terminal device may measure the second-type downlink reference signal based on the second measurement configuration information when a distance between the second position information and a first reference position in a serving cell is greater than a first threshold; and/or the terminal device may measure the second-type downlink reference signal based on the second measurement configuration information when a distance between the second position information and a second reference position in a neighboring cell is less than a second threshold. Based on such a design, the terminal device can quickly determine whether to perform cell handover caused by the terminal device movement, to improve efficiency of the handover.

In a possible design, the second measurement configuration information is further used to configure one or more of the following: the first reference position, the first threshold, the second reference position, and the second threshold.

In a possible design, one transmission resource for the first-type downlink reference signal includes one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal. Such a design can assist the terminal device in performing signal measurement in a cell handover process, to improve efficiency of the handover.

In a possible design, the first measurement configuration information is used to configure a first access resource associated with the first-type downlink reference signal, and the first access resource is different from a second access resource associated with the second-type downlink reference signal. An access resource used for the terminal device group handover triggered by the network device motion is designed, to improve a success rate of the terminal device group handover.

According to a second aspect, an embodiment of this application provides a handover method, and the method may be performed by a network device. The network device herein may be the network device, or may be a processor, a module, a chip, a chip system, or the like that implements the method and that is in the network device. The method includes: The network device determines first measurement configuration information and second measurement configuration information, and sends the first measurement configuration information and the second measurement configuration information. The first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover.

In a possible design, the first-type downlink reference signal is used for cell handover triggered by network device motion, and the second-type downlink reference signal is used for cell handover triggered by a terminal device.

In a possible design, the first measurement configuration information includes measurement time corresponding to first position information.

In a possible design, the first measurement configuration information is used to configure a plurality of transmission resources for the first-type downlink reference signal, and activation time of at least two of the plurality of transmission resources for the first-type downlink reference signal is different.

In a possible design, the plurality of transmission resources for the first-type downlink reference signal include a first transmission resource corresponding to a first cell group and a second transmission resource corresponding to a second cell group. The first transmission resource is different from the second transmission resource, the first transmission resource includes measurement time corresponding to the first position information, and the second transmission resource includes measurement time corresponding to the first position information.

In a possible design, the first measurement configuration information is used to configure a first signal quality threshold, the first signal quality threshold is determined based on an L1/L2 mobility management configuration of the terminal device, and the first signal quality threshold is used by the terminal device to determine whether to perform cell handover.

In a possible design, the second measurement configuration information is used to configure one or more of the following parameters: a first reference position in a serving cell, a first threshold, a second reference position in a neighboring cell, and a second threshold. The one or more parameters configured by using the second measurement configuration information is used by the terminal device to determine whether to measure the second-type downlink reference signal.

In a possible design, one transmission resource for the first-type downlink reference signal includes one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

In a possible design, the first measurement configuration information is used to configure a first access resource associated with the first-type downlink reference signal, and the first access resource is different from a second access resource associated with the second-type downlink reference signal.

According to a third aspect, an embodiment of this application provides a communication apparatus. The communication apparatus may be a terminal device, or may be an apparatus, a module, a chip, or the like in the terminal device, or may be an apparatus that can be used in a matching manner with the terminal device. In a design, the communication apparatus may include modules that are in one-to-one correspondence with the methods/operations/steps/actions described in the first aspect. The modules may be implemented by a hardware circuit, software, or a combination of a hardware circuit and software. In a design, the communication apparatus may include a processing module and a communication module.

The communication module is configured to obtain first measurement configuration information and second measurement configuration information. The first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover. The processing module is configured to: measure the first-type downlink reference signal based on first position information and the first measurement configuration information; and/or measure the second-type downlink reference signal based on second position information and the second measurement configuration information, to obtain a measurement result; and determine, based on the measurement result, whether to perform cell handover.

In a possible design, the first-type downlink reference signal is used for cell handover triggered by network device motion, and the second-type downlink reference signal is used for cell handover triggered by the terminal device.

In a possible design, the processing module is specifically configured to measure the first-type downlink reference signal from a target network device based on measurement time that is in the first measurement configuration information and that corresponds to the first position information.

In a possible design, the first measurement configuration information is used to configure a plurality of transmission resources for the first-type downlink reference signal, and activation time of at least two of the plurality of transmission resources for the first-type downlink reference signal is different.

In a possible design, the plurality of transmission resources for the first-type downlink reference signal include a first transmission resource corresponding to a first cell group and a second transmission resource corresponding to a second cell group. The processing module is specifically configured to: measure, within activation time of the first transmission resource, the first-type downlink reference signal from the first cell group based on measurement time that is in the first transmission resource and that corresponds to the first position information; or measure, within activation time of the second transmission resource, the first-type downlink reference signal from the second cell group based on measurement time that is in the second transmission resource and that corresponds to the first position information.

In a possible design, the first measurement configuration information is used to configure a first signal quality threshold, and the first signal quality threshold is determined based on an L1/L2 mobility management configuration of the terminal device. The processing module is specifically configured to determine to perform cell handover, if signal quality of the first downlink reference signal included in the measurement result is greater than or equal to the first signal quality threshold.

In a possible design, when measuring the second-type downlink reference signal based on the second position information and the second measurement configuration information, the processing module is specifically configured to: measure the second-type downlink reference signal based on the second measurement configuration information when a distance between the second position information and a first reference position in a serving cell is greater than a first threshold; and/or measure the second-type downlink reference signal based on the second measurement configuration information when a distance between the second position information and a second reference position in a neighboring cell is less than a second threshold.

In a possible design, the second measurement configuration information is further used to configure one or more of the following: the first reference position, the first threshold, the second reference position, and the second threshold.

In a possible design, one transmission resource for the first-type downlink reference signal includes one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

In a possible design, the first measurement configuration information is used to configure a first access resource associated with the first-type downlink reference signal, and the first access resource is different from a second access resource associated with the second-type downlink reference signal.

According to a fourth aspect, an embodiment of this application provides a communication apparatus. The communication apparatus may be a network device, or may be an apparatus, a module, a chip, or the like in the network device, or may be an apparatus that can be used in a matching manner with the network device. In a design, the communication apparatus may include modules that are in one-to-one correspondence with the methods/operations/steps/actions described in the second aspect. The modules may be implemented by a hardware circuit, software, or a combination of a hardware circuit and software. In a design, the communication apparatus may include a processing module and a communication module.

The processing module is configured to determine first measurement configuration information and second measurement configuration information. The communication module is configured to send the first measurement configuration information and the second measurement configuration information. The first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover.

In a possible design, the first-type downlink reference signal is used for cell handover triggered by network device motion, and the second-type downlink reference signal is used for cell handover triggered by a terminal device.

In a possible design, the first measurement configuration information includes measurement time corresponding to first position information.

In a possible design, the first measurement configuration information is used to configure a plurality of transmission resources for the first-type downlink reference signal, and activation time of at least two of the plurality of transmission resources for the first-type downlink reference signal is different.

In a possible design, the plurality of transmission resources for the first-type downlink reference signal include a first transmission resource corresponding to a first cell group and a second transmission resource corresponding to a second cell group. The first transmission resource is different from the second transmission resource, the first transmission resource includes measurement time corresponding to the first position information, and the second transmission resource includes measurement time corresponding to the first position information.

In a possible design, the first measurement configuration information is used to configure a first signal quality threshold, the first signal quality threshold is determined based on an L1/L2 mobility management configuration of the terminal device, and the first signal quality threshold is used by the terminal device to determine whether to perform cell handover.

In a possible design, the second measurement configuration information is used to configure one or more of the following parameters: a first reference position in a serving cell, a first threshold, a second reference position in a neighboring cell, and a second threshold. The one or more parameters configured by using the second measurement configuration information is used by the terminal device to determine whether to measure the second-type downlink reference signal.

In a possible design, one transmission resource for the first-type downlink reference signal includes one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

In a possible design, the first measurement configuration information is used to configure a first access resource associated with the first-type downlink reference signal, and the first access resource is different from a second access resource associated with the second-type downlink reference signal.

According to a fifth aspect, an embodiment of this application provides a communication apparatus. The communication apparatus includes a processor, configured to implement the method described in the first aspect. The processor is coupled to a memory, the memory is configured to store instructions and data, and when the processor executes the instructions stored in the memory, the method described in the first aspect may be implemented. Optionally, the communication apparatus may further include the memory. The communication apparatus may further include a communication interface. The communication interface is configured for the apparatus to communicate with another device. For example, the communication interface may be a transceiver, a circuit, a bus, a module, a pin, or another type of communication interface.

In a possible device, the communication apparatus includes:
the memory, configured to store the instructions;
the communication interface, configured to obtain first measurement configuration information and second measurement configuration information, where the first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover; and
the processor, configured to: measure the first-type downlink reference signal based on first position information and the first measurement configuration information; and/or measure the second-type downlink reference signal based on second position information and the second measurement configuration information, to obtain a measurement result; and determine, based on the measurement result, whether to perform cell handover.

According to a sixth aspect, an embodiment of this application provides a communication apparatus. The communication apparatus includes a processor, configured to implement the method described in the second aspect. The processor is coupled to a memory, the memory is configured to store instructions and data, and when the processor executes the instructions stored in the memory, the method described in the second aspect may be implemented. Optionally, the communication apparatus may further include the memory. The communication apparatus may further include a communication interface. The communication interface is configured for the apparatus to communicate with another device. For example, the communication interface may be a transceiver, a circuit, a bus, a module, a pin, or another type of communication interface.

In a possible device, the communication apparatus includes:
the memory, configured to store the instructions;
the processor, configured to determine first measurement configuration information and second measurement configuration information, where the first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover; and
the communication interface, configured to send the first measurement configuration information and the second measurement configuration information.

According to a seventh aspect, this disclosure provides a communication system, including the communication apparatus described in the third aspect or the fifth aspect, and the communication apparatus described in the fourth aspect or the sixth aspect.

According to an eighth aspect, this disclosure further provides a computer program. When the computer program is run on a computer, the computer is caused to perform the method provided in the first aspect or the second aspect.

According to a ninth aspect, this disclosure further provides a computer program product, including instructions. When the instructions are run on a computer, the computer is caused to perform the method provided in the first aspect or the second aspect.

According to a tenth aspect, this disclosure further provides a computer-readable storage medium. The computer-readable storage medium stores a computer program or instructions, and when the computer program or the instructions are run on a computer, the computer is caused to perform the method provided in the first aspect or the second aspect.

According to an eleventh aspect, this disclosure further provides a chip. The chip is configured to read a computer program stored in a memory, to perform the method provided in the first aspect or the second aspect, or the chip includes a circuit configured to perform the method provided in the first aspect or the second aspect.

According to a twelfth aspect, this disclosure further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete component.

For effects of the solutions provided in any one of the second aspect to the twelfth aspect, refer to the corresponding descriptions in the first aspect.

### BRIEF DESCRIPTION OF DRAWINGS

FIG. 1 is a diagram of an architecture of a terrestrial network communication system according to an embodiment of this application;
FIG. 2 is a diagram of an architecture of an NTN communication system according to an embodiment of this application;
FIG. 3 is a diagram of an architecture of a 5G satellite communication system according to an embodiment of this application;
FIG. 4 is a diagram of an architecture of a satellite communication system according to an embodiment of this application;
FIG. 5 is a diagram of a beam-hopping communication process according to an embodiment of this application;
FIG. 6 is a diagram of terminal device group handover that occurs in beam-hopping communication according to an embodiment of this application;
FIG. 7 is a schematic flowchart of a handover method according to an embodiment of this application;
FIG. 8 is a diagram of a scenario of group handover triggered by satellite motion;
FIG. 9 is a diagram of a scenario of group handover triggered by satellite motion;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

At least one (item) in embodiments of this application indicates one or more (items). A plurality of (items) indicates two (items) or more than two (items). "And/or" describes an association relationship for describing associated objects and represents that three relationships may exist. For example, A and/or B may represent the following three cases: Only A exists, both A and B exist, and only B exists. A character "/" generally represents an "or" relationship between the associated objects. In addition, it should be understood that although terms such as first and second may be used in embodiments of this application to describe objects, these objects should not be limited by these terms. These terms are merely used for distinguishing the objects from each other.

Terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, a term like "example" or "for example" is used to represent giving an example, an illustration, or descriptions. Any method or design scheme described as the "example" or "for example" in embodiments of this application should not be explained as being more preferred or having more advantages than another method or design scheme. To be precise, use of the term like "example" or "for example" is intended to present a related concept in a specific manner.

Technologies provided in embodiments of this application may be applied to various communication systems, for example, a non-terrestrial network (non-terrestrial network, NTN) system like a satellite communication system, a high altitude platform station (high altitude platform station, HAPS) communication system, or an uncrewed aerial vehicle, an integrated communication and navigation (integrated communication and navigation, ICAN) system, a global navigation satellite system (global navigation satellite system, GNSS), and an ultra-dense low-orbit satellite communication system. The communication system to which embodiments of this application are applied may be integrated with a terrestrial communication system. For example, the terrestrial communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system like a 6G communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description.

For example, the terrestrial communication system may include at least one terminal device and at least one network device. The network device may send a downlink signal to the terminal device, and/or the terminal device may send an uplink signal to the network device. In addition, it may be understood that if the communication system includes a plurality of terminal devices, the plurality of terminal devices may also send signals to each other. That is, both a signal sending network element and a signal receiving network element may be terminal devices.

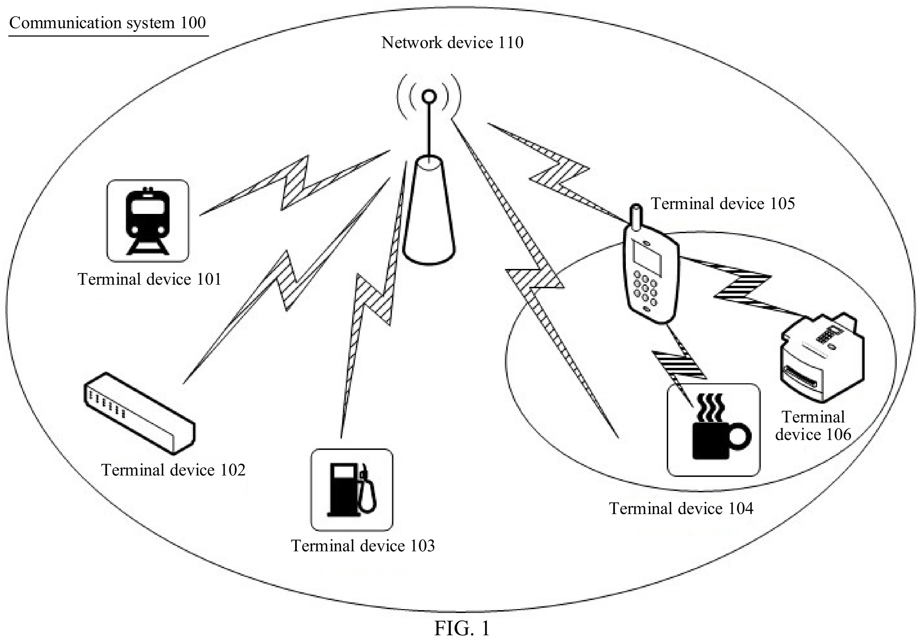

FIG. 1 shows an architecture of a mobile communication system. The communication system 100 may include a network device 110 and terminal devices 101 to 106. It should be understood that the communication system 100 may include more or fewer network devices or terminal devices. The network device or the terminal device may be hardware, may be software obtained through function division, or may be a combination thereof. In addition, the terminal devices 104 to 106 may also form a communication system. For example, the terminal device 105 may send downlink data to the terminal device 104 or the terminal device 106. The network device and the terminal device may communicate with each other via another device or network element. The network device 110 may send downlink data to the terminal devices 101 to 106, or may receive uplink data sent by the terminal devices 101 to 106. Certainly, the terminal devices 101 to 106 may also send uplink data to the network device 110, or may receive downlink data sent by the network device 110.

The network device 110 is a node in a radio access network (radio access network, RAN), and may also be referred to as a base station or a RAN node (or device). Currently, some examples of an access network device 101 include: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP), a wireless relay node, and a wireless backhaul node in a wireless fidelity (wireless fidelity, Wi-Fi) system, a transmission point (transmission point, TP) or a transmission reception point (transmission reception point, TRP), a satellite, an uncrewed aerial vehicle, and the like. The network device may alternatively be a NodeB (next generation NodeB, gNB), a TRP, or a TP in a 5G system, or may be one antenna panel or one group of antenna panels (including a plurality of antenna panels) of a gNB in a 5G system. In addition, the network device may alternatively be a network node that forms a gNB or a TP, for example, a BBU, a distributed unit (distributed unit, DU), or the like. Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system. The network device 110 may alternatively be a network device in a future possible communication system. A specific technology used by the network device and a specific device form of the network device are not limited in embodiments of this application.

The terminal devices 101 to 106 each may also be referred to as a user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like, is a device that provides voice or data connectivity for a user, or may be an internet of things device. For example, the terminal devices 101 to 106 include a handheld device, a vehicle-mounted device, or the like that has a wireless communication function. Currently, the terminal devices 101 to 106 each may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. The terminal devices 101 to 106 may alternatively be other devices having terminal functions. For example, the terminal devices 101 to 106 may alternatively be devices having terminal functions in D2D communication.

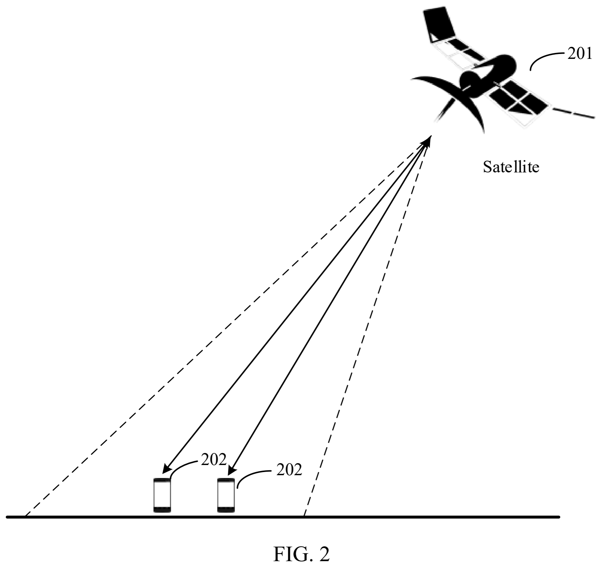

Based on the descriptions of the architecture of the terrestrial communication system shown in FIG. 1, an example in which embodiments of this application may be applied to a non-terrestrial network (non-terrestrial network, NTN) communication system is used for description. An NTN includes nodes such as a satellite network, a high-altitude platform, and an uncrewed aerial vehicle, is significantly characterized by global coverage, long-distance transmission, flexible networking, easy deployment, being not limited by geographical conditions, and the like, and has been widely applied to a plurality of fields such as maritime communication, positioning and navigation, disaster relief, scientific experiments, video broadcasting, and earth observation. A terrestrial 5G network and a satellite network are integrated and complement each other to form an integrated communication network that provides seamless global coverage by sea, land, air, space, and ground, and meet a plurality of ubiquitous service requirements of users. An example in which NTN communication is satellite communication, in other words, the NTN communication system is a satellite system is used in embodiments of this application. As shown in FIG. 2, the NTN communication system includes a satellite 201 and terminal devices 202. For explanation of the terminal devices 202, refer to the related descriptions of the terminal devices 101 to 106. The satellite 201 may also be referred to as a high-altitude platform, a high-altitude aircraft, or a satellite base station. When the NTN communication system is associated with a terrestrial network communication system, the satellite 201 may be considered as one or more network devices in an architecture of the terrestrial network communication system. The satellite 201 provides a communication service for the terminal devices 202, and the satellite 201 may further be connected to a core network device. For a structure and a function of the network device 201, refer to the foregoing descriptions of the network device 201. For a communication manner between the satellite 201 and the terminal devices 202, also refer to the foregoing descriptions in FIG. 1. Details are not described herein again. The solutions in embodiments of this application may also be directly applied to a terrestrial communication network, or may be applied to a terrestrial communication network after being slightly modified in a method that can be figured out by a person skilled in the art. Details are not described herein again.

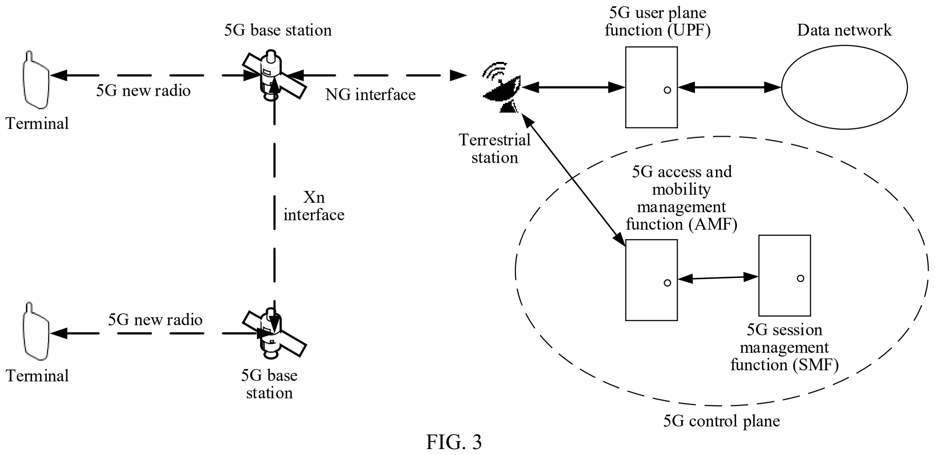

5G is used as an example, an architecture of a 5G satellite communication system is shown in FIG. 3. A terrestrial terminal device accesses a network through 5G new radio. A 5G base station is deployed on a satellite, and is connected to a terrestrial core network through a radio link. In addition, a radio link exists between satellites, to complete signaling exchange and user data transmission between base stations. Devices and interfaces in FIG. 3 are described as follows:

A 5G core network provides services such as user access control, mobility management, session management, user security authentication, and accounting. The 5G core network includes a plurality of functional units, which may be classified into control-plane functional entities and data-plane functional entities. An access and mobility management unit (AMF) is responsible for user access management, the security authentication, and the mobility management. A user plane unit (UPF) is responsible for managing user plane data transmission, traffic statistics collection, and the like.

A terrestrial station is responsible for forwarding signaling and service data between the satellite base station and the 5G core network.

The 5G new radio is a radio link between a terminal and a base station.

An Xn interface is an interface between 5G base stations, and is mainly used for signaling exchange such as handover.

An NG interface is an interface between the 5G base station and the 5G core network, and mainly used for exchanging signaling, for example, NAS signaling, of the core network, and service data of a user.

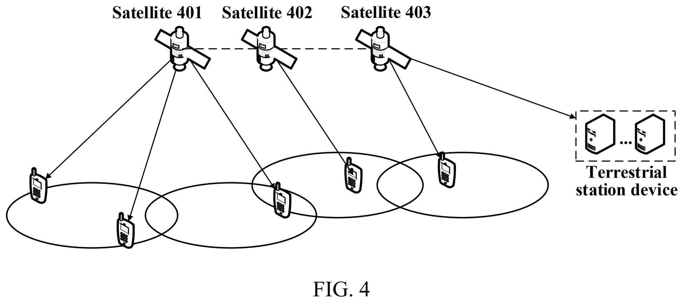

FIG. 4 is a diagram of an architecture of another possible satellite communication system to which this application is applicable. If a satellite communication system is compared to a terrestrial communication system, a satellite may be considered as one or more network devices on the ground, for example, a base station. Through an access point 1, an access point 2, and even an access point 3 to an access point n (not shown in the figure), the satellite provides a communication service for a terminal device, and the satellite may be further connected to a core network device (for example, an access and mobility management function (access and mobility management function, AMF)). The satellite may be a low earth orbit (low earth orbit, LEO) satellite or a non-geostationary earth orbit (non-geostationary earth orbit, NGEO) satellite.

For example, the satellite communication system in FIG. 4 includes a satellite 401, a satellite 402, and a satellite 403. Each satellite may provide a communication service, a navigation service, a positioning service, and the like for the terminal device through a plurality of beams. The satellite in this scenario may be the LEO satellite. The satellite uses the plurality of beams to cover a service zone, and different beams may be used to perform communication in one or more of a time-division manner, a frequency-division manner, and a space-division manner. The satellite performs wireless communication with the terminal device by broadcasting a communication signal, a navigation signal, and the like. The satellite may perform wireless communication with a terrestrial station device. As shown in FIG. 4, the satellite 403 is connected to the terrestrial station device. The satellite mentioned in embodiments of this application may be a satellite base station, may include an orbit receiver or a repeater configured to relay information, or may be a network side device mounted on the satellite.

Some examples of the terrestrial station device are: a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for a user equipment (UE), bears a data service, and the like. The CN may further include network elements such as an access and mobility management function (access and mobility management function, AMF), a session management function (session management function, SMF), an authentication server function (authentication server function, AUSF), a policy control function (policy control function, PCF), and a user plane function (user plane function, UPF). The AMF network element is configured to manage access and mobility of the UE, and is mainly responsible for functions such as UE authentication, UE mobility management, and UE paging.

The satellite communication system includes a transparent satellite architecture and a non-transparent satellite architecture. Transparent transmission is also referred to as bent-pipe forwarding transmission. To be specific, only processes such as frequency conversion and signal amplification are performed on a signal on a satellite, and the satellite is transparent to the signal as if the satellite does not exist. Non-transparent transmission is also referred to as regenerative (on-satellite access/processing) transmission. To be specific, a satellite has some or all of functions of a base station. For example, the satellite 401 and the satellite 402 in FIG. 4 are in the non-transparent satellite architecture, and the satellite 403 are in the transparent satellite architecture. In addition, the satellite may work in a quasi earth-fixed mode or a satellite-fixed mode.

The network device in the terrestrial communication system and the satellite in an NTN communication system are collectively considered as network devices. An apparatus configured to implement a function of a network device may be a network device, or may be an apparatus that can support a network device in implementing the function, for example, a chip system. The apparatus may be mounted in the network device. When the technical solutions provided in embodiments of this application are described below, an example in which an apparatus configured to implement the function of the network device is a satellite is used to describe the technical solutions provided in embodiments of this application. It may be understood that, when the method provided in embodiments of this application is applied to the terrestrial network communication system, an action performed by the satellite may be performed by the base station or the network device.

In embodiments of this application, an apparatus configured to implement a function of a terminal device may be a terminal device, or may be an apparatus that can support a terminal device in implementing the function, for example, a chip system, a hardware circuit, a software module, or a combination of a hardware circuit and a software module. The apparatus may be mounted in the terminal device or used in a matching manner with the terminal device. In embodiments of this application, the chip system may include a chip, or may include a chip and another discrete component. In the technical solutions provided in embodiments of this application, an example in which an apparatus configured to implement the function of the terminal device is the terminal device is used, to describe the technical solutions provided in embodiments of this application.

For ease of understanding of embodiments of this application, an application scenario of this application is described below. A service scenario described in embodiments of this application is intended to describe the technical solutions of embodiments of this application more clearly, and does not constitute a limitation on the technical solutions provided in embodiments of this application. It may be learned by a person of ordinary skill in the art that, with emergence of a new service scenario, the technical solutions provided in embodiments of this application are also applicable to a similar technical problem.

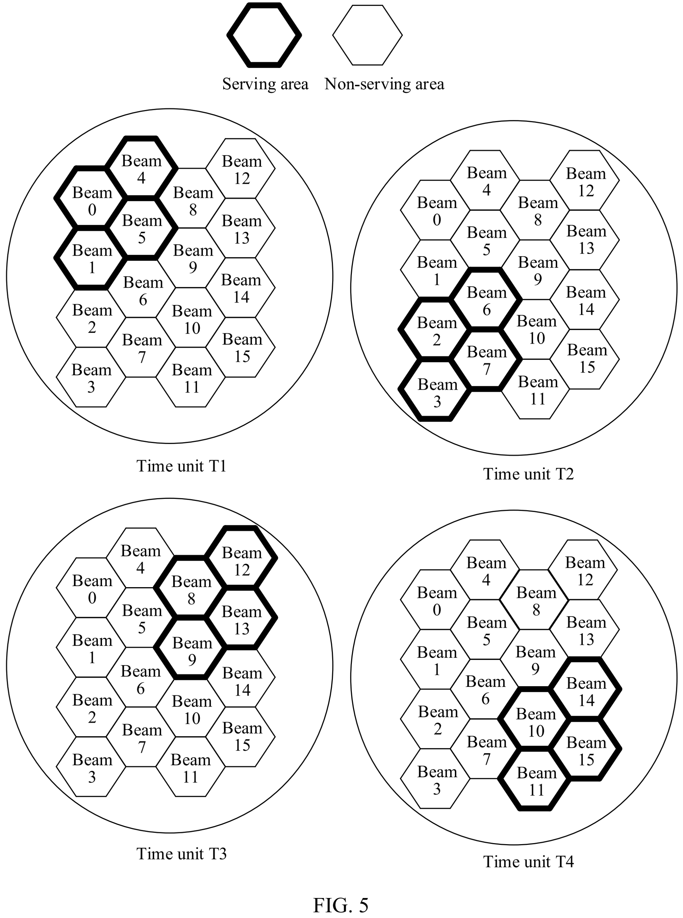

One satellite may cover thousands or even tens of thousands of kilometers, and one beam may cover tens or even thousands of kilometers. To support wide-zone coverage of the satellite, tens of, hundreds of, or even more beams usually need to be configured in one satellite. To alleviate a contradiction between small single-satellite load and wide coverage, beam hopping may be used for zone coverage. To be specific, a large quantity of beams may be configured in one satellite to cover a wide zone, but only a small quantity of beams are used in a same time unit to perform zone coverage, and a wide zone is covered by using a plurality of beams used in different time units. For example, refer to FIG. 5. 16 beams are configured in one satellite to cover a wide zone, but only four beams are used in one time unit to perform zone coverage. In a time unit T1, four beams numbered 0, 1, 4, and 5 are used for zone coverage. In a time unit T2, four beams numbered 2, 3, 6, and 7 are used for zone coverage. The rest may be deduced by analogy. All zones (namely, zones corresponding to 16 beams) covered by a single satellite are served in a time-division manner of T1, T2, T3, and T4. One time unit may be dozens of milliseconds, several milliseconds, or even at a smaller time granularity. In a satellite communication network, a plurality of beams are configured in one satellite. A beam configured for the satellite refers to a shape formed on the surface of the earth by an electromagnetic wave emitted by a satellite antenna, and has a specific range, which is similar to a beam of a flashlight. Alternatively, a signal emitted by the satellite is a signal wave emitted in a concentrated manner in a specified direction instead of being radiated in a 360° pattern. In a possible design, one beam configured in the satellite corresponds to one cell. In another possible design, two or more beams configured in the satellite correspond to one cell.

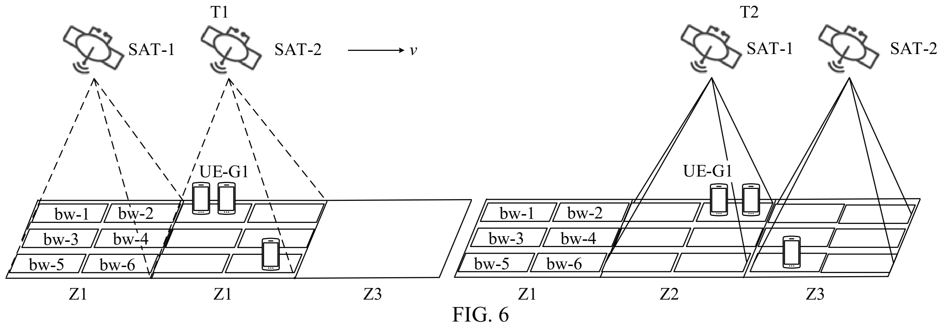

In a beam-hopping satellite communication system, satellite motion causes group handover of terminal devices in a specific zone (zone). As shown in FIG. 6, a UE cluster in a single beam position in a zone Z2 is denoted as UE-G1, and UE-G1 includes a plurality of UEs. At time T1, UE-G1 is served by one or more beams of a satellite SAT-2. At time T2, the beam position cannot be served due to motion of the satellite SAT-2, and UE-G1 is served by one or more beams of a satellite SAT-1. Therefore, group handover occurs on UE-G1. In addition, because the satellite moves at a high speed of approximately 7.5 km/s, the group handover happens approximately every several seconds to dozens of seconds. In other words, in the beam-hopping satellite system, it is normal that satellite movement triggers terminal device group handover. The terminal device group handover may also be described as UE group handover, user group handover, or the like.

Currently, cell handover in a terrestrial network is mainly triggered by terminal device movement. Generally, a network device may send, to the terminal device, measurement configurations corresponding to a serving cell and a neighboring cell, and the UE measures cell signal quality based on the measurement configurations, for example, measures one or more of the following: reference signal received power (reference signal received power, RSRP), reference signal received quality (reference signal received quality, RSRQ), and a reference signal or a signal-to-interference-plus-noise ratio (signal-to-interference-plus-noise ratio, SINR). The terminal device reports a measurement result to the network device, and the network device selects an appropriate neighboring cell based on the received measurement result, and exchanges information such as context information, admission control, and a reserved resource that are related to user handover. Then, the network device sends handover-related control information to the terminal device via the serving cell, and completes an access procedure in a new cell. If an existing cell handover design is applied to the beam-hopping satellite system, efficiency and a success rate of the group handover caused by the satellite motion are low.

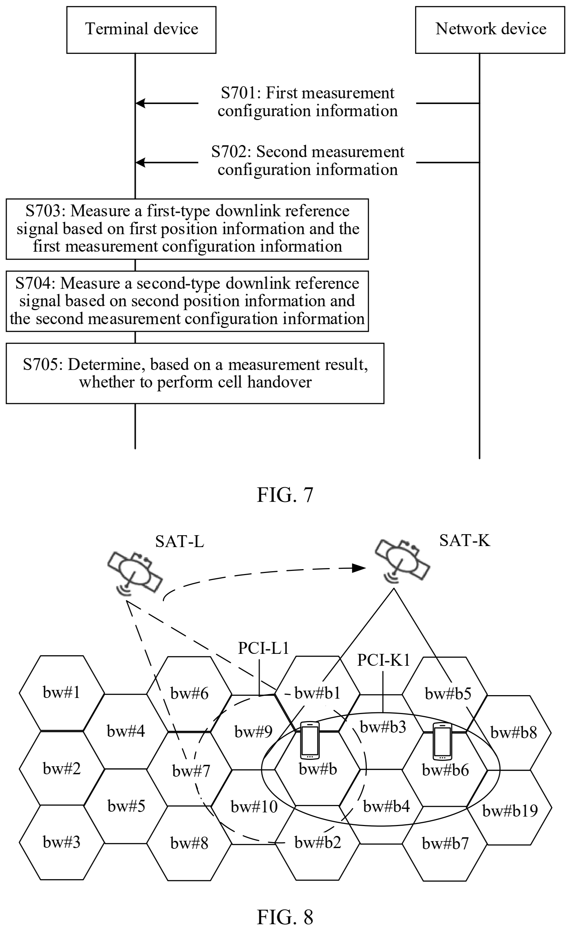

Based on this, embodiments of this application provide a handover method and an apparatus. Different measurement configurations are designed for group handover caused by satellite motion and cell handover triggered by terminal device movement, to adapt to a plurality of communication scenarios. This helps the terminal device flexibly select an appropriate measurement configuration to perform cell handover, and can improve efficiency and a success rate of the cell handover. The following further describes the handover method in detail with reference to FIG. 7.

FIG. 7 shows a handover method. The handover method includes the following procedures.

S701: A network device sends first measurement configuration information to a terminal device.

The first measurement configuration information is used to configure a transmission resource for a first-type downlink reference signal. The first-type downlink reference signal is used for cell handover. The cell handover includes cell handover of a terminal device in a connected mode, or cell reselection of a terminal device in an idle mode or an inactive mode. It may be understood that the cell reselection herein is a special example of the cell handover. Optionally, in a beam-hopping satellite system, the first-type downlink reference signal is used for cell handover triggered by satellite motion. In other words, the first-type downlink reference signal is used for terminal device group handover triggered by network device motion. It may be understood that the network device is a serving satellite of the terminal device or a terrestrial device.

In a possible design, the first measurement configuration information is used to configure the transmission resource for the first-type downlink reference signal from a target network device. The target network device may be a neighboring satellite of a current serving satellite, and the neighboring satellite is to replace the current serving satellite to provide a service for the terminal device. For example, as shown in FIG. 8, a network device serves a plurality of beam positions (that is, geographical zones) via at least one cell. At first time, a network device (SAT-K) provides a service for a terminal device at a beam position bw#b via a cell PCI-K1. As the satellite moves, a neighboring satellite (SAT-L) is to provide, via a cell PCI-LI, a service for the terminal device at the beam position bw#b. It may be understood that different time corresponds to different serving satellites and neighboring satellites.

In a specific implementation, the network device may negotiate with the target network device to determine the transmission resource for the first-type downlink reference signal. For example, the transmission resource for the first-type downlink reference signal includes one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam corresponding to the first-type downlink reference signal, a receive window corresponding to the first-type downlink reference signal, and a receive window offset corresponding to the first-type downlink reference signal. It may be understood that the receive window offset is an offset between a receive window corresponding to the first-type downlink reference signal and a reference receive window.

Optionally, the time domain resource occupied by the first-type downlink reference signal may represent, by using a bitmap (bitmap), a sending position of the first-type downlink reference signal in time domain. The transmission periodicity of the first-type downlink reference signal is related to a motion status of a satellite, and the transmission periodicity of the first-type downlink reference signal may be determined based on a latitude position related to a motion trajectory of the satellite. For example, different periodicities may be used at a low latitude and a high latitude. The low latitude may be a latitude within 50 degrees north or south of the equator, and the high latitude is a latitude above 50 degrees north or south of the equator. For example, a periodicity corresponding to a low-latitude position is 30s, and a periodicity corresponding to a high-latitude position is 5s.

Optionally, the receive window corresponding to the first-type downlink reference signal may be represented by using a time-frequency resource occupied by the receive window, or may be represented by using the offset between the receive window and the reference receive window. In a possible implementation, a time domain resource for the receive window is at a cell level. To be specific, terminal devices at all beam positions covered by one cell may measure the first-type downlink reference signal based on the receive window. In another possible implementation, a time domain resource for the receive window is at a beam position level, and different beam positions correspond to different receive windows. For example, when the offset between the receive window and the reference receive window is used for representation, that the network device configures, in the first measurement configuration information, the receive window corresponding to the first-type downlink reference signal specifically includes: The network device indicates, in the first measurement configuration information, a time-frequency resource for the reference receive window and offsets corresponding to a plurality of beam positions. Different beam positions correspond to different offsets. Optionally, the network device may further indicate, in the first configuration information, a first access resource associated with the first-type downlink reference signal, where the first access resource is used for the cell handover triggered by the satellite motion. The first access resource may include one or more of the following: a periodicity of an access occasion (random access channel occasion, RO), a frequency domain resource for an RO, a preamble index (preamble index), a mask index (mask index), an access beam identifier, ephemeris information of the target network device (the neighboring satellite), and a paging configuration. Considering that the satellite motion normally causes the terminal device group handover, that is, a plurality of terminal devices may need to periodically perform cell handover together, in a possible design, the access occasion (random access channel occasion, RO) in the first access resource may be greater than an access occasion in a random access resource, and the periodicity of the RO in the first access resource is also greater than a periodicity of the RO in the random access resource.

Optionally, the first downlink reference signal may be a synchronization signal block (synchronization signal block, SSB) used for the cell handover triggered by the satellite motion. In this embodiment of this application, to be distinguished from an SSB used for random access, the SSB used for the cell handover triggered by the satellite motion is denoted as an HO-SSB. The SSB used for random access is denoted as an NR-SSB. Certainly, the two types of SSBs may alternatively be distinguished by using other names. This is not limited in embodiments of this application. Similarly, in this embodiment of this application, the RO in the first access resource is denoted as an HO-RO, to be distinguished from the RO in the random access resource. In another possible design, the first measurement configuration information is used to configure a plurality of transmission resources for the first-type downlink reference signal, and activation time of at least two of the plurality of transmission resources for the first-type downlink reference signal is different. Optionally, cyclical activation is performed between the at least two transmission resources. In a specific implementation, timers used for activation may be configured for the plurality of transmission resources for the first downlink reference signal. Such a design may be applied to a scenario in which the terminal device is cyclically handed over between a plurality of cell groups due to the satellite movement. It may be understood that the cell group includes a plurality of cells, and may also be referred to as a cell set.

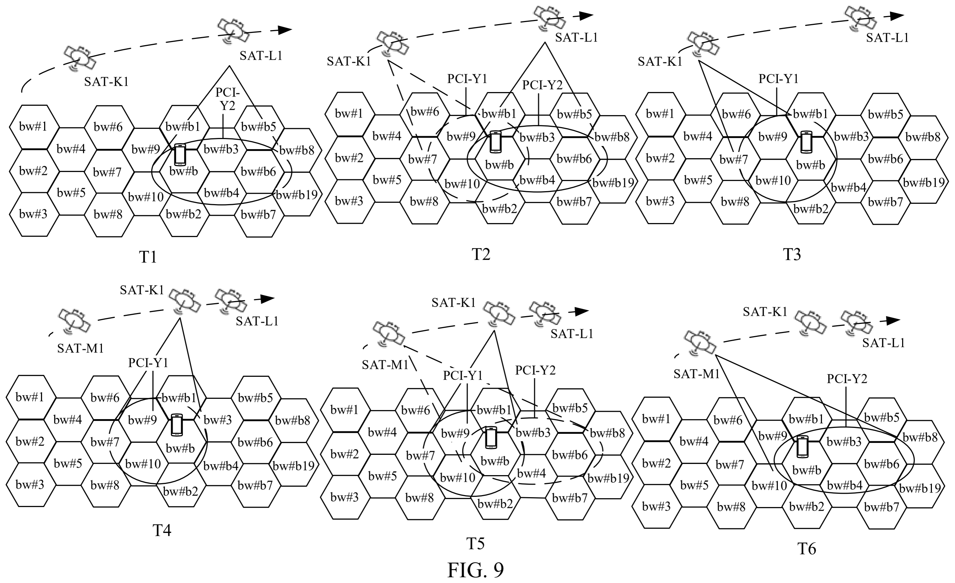

That the terminal device is cyclically handed over between a first cell group and a second cell group is used as an example. The network device may configure a first transmission resource and a second transmission resource for a first reference signal by using the first measurement configuration information. The first transmission resource corresponds to the first cell group, and the second transmission resource corresponds to the second cell group. In a scenario in which the satellite movement triggers the cell handover, the terminal device may be handed over between the first cell group and the second cell group based on the first transmission resource or the second transmission resource, and different satellites may provide services for the terminal device via the first cell group or the second cell group. As shown in FIG. 9, a terminal device is at a beam position bw#b. A satellite SAT-L1 provides a service for the terminal device via PCI-Y2 at time T1 and T2, and completes handover from PCI-Y2 to PCI-Y1 at the time T2. A satellite SAT-K1 provides a service for the terminal device via PCI-Y1 at time T3 to T5, and completes handover from PCI-Y1 to PCI-Y2 at the time T5. A satellite SAT-M1 provides a service for the terminal device via PCL-Y2 at time T6. Measurement configuration information corresponding to a cell group is designed, so that the measurement configuration information may be reused in a scenario in which the terminal device is cyclically handed over between a plurality of cell groups. In other words, measurement configuration needs to be performed only once, to simplify a measurement configuration procedure and mobility management, and improve efficiency of the handover. It may be understood that, the cyclical handover of the terminal device between the plurality of cell groups may be triggered by motion of different satellites.

Optionally, the network device may further indicate, in the first configuration information, that the first cell group is associated with a second access resource and the second cell group is associated with a third access resource. The second access resource/third access resource is used for the cell handover triggered by the satellite motion. For details, refer to the foregoing descriptions of the first access resource for understanding. For example, if determining, based on the first transmission resource associated with the first cell group, to perform cell handover, the terminal device may access a target cell based on the second access resource associated with the first cell group. If determining, based on a third transmission resource associated with the second cell group, to perform cell handover, the terminal device may access a target cell based on the third access resource associated with the first cell group.

In addition, in the foregoing two possible designs, the network device may further configure, for the terminal device, a trigger condition for determining whether to perform cell handover. For example, the network device may determine conditional handover (conditional handover, CHO) information based on a layer 1 (L1)/layer 2 (L2) mobility management configuration. For example, the CHO information indicates to perform cell handover when a measurement result of measuring a reference signal by the terminal device meets a specified condition. It may be understood that the L1/L2 mobility management configuration is a management configuration of inter-cell mobility centered on L1/L2. In the L1/L2 mobility management configuration, a measurement result obtained by the terminal device by measuring the first-type downlink reference signal may include one or more of the following: reference signal power (reference signal received power, RSRP), reference signal quality (reference signal received quality, RSRQ), and a signal-to-interference-plus-noise ratio (signal-to-interference-plus-noise ratio, SINR) of a reference signal. The CHO information that can be configured by the network device for the terminal device may include thresholds (also referred to as threshold values) corresponding to measurement results. For example, the network device may configure an RSRP threshold for the RSRP, and the terminal device performs cell handover when determining that L1-RSRP obtained by measuring the first-type downlink reference signal is greater than or equal to an L1-RSRP threshold. For example, the network device may configure an RSRQ threshold for the RSRQ, and the terminal device performs cell handover when determining that L1-RSRQ obtained by measuring the first-type downlink reference signal is greater than or equal to an L1-RSRQ threshold. For another example, the network device may configure an SINR threshold for the SINR, and the terminal device performs cell handover when determining that L1-SINR obtained by measuring the first-type downlink reference signal is greater than or equal to an L1-SINR threshold.

Based on this, in a possible design, the network device may further indicate, in the first measurement configuration information, the foregoing CHO information corresponding to the L1/L2 mobility management configuration. For example, the first measurement configuration information may include one or more of the following: a first signal quality threshold (used to measure the RSRQ), a first signal power threshold (used to measure the RSRP), and a first signal-to-interference-plus-noise ratio threshold (used to measure the SINR) of a signal.

S702: The network device sends second measurement configuration information to the terminal device.

The second measurement configuration information is used to configure a transmission resource for a second-type downlink reference signal, and the second-type downlink reference signal is used for cell handover. For example, the second-type downlink reference signal is used for cell handover triggered by terminal device movement. Optionally, the second-type downlink reference signal may be an NR-SSB. In other words, an SSB used for the cell handover triggered by the terminal device movement may be the same as an SSB used for random access.

In a specific implementation, the transmission resource for the second-type downlink reference signal includes one or more of the following: a time domain resource corresponding to the second-type downlink reference signal, a transmission periodicity of the second-type downlink reference signal, a sequence corresponding to the second-type downlink reference signal, a polarization mode corresponding to the second-type downlink reference signal, a frequency domain resource corresponding to the second-type downlink reference signal, a beam corresponding to the second-type downlink reference signal, a receive window corresponding to the second-type downlink reference signal, and a receive window offset corresponding to the second-type downlink reference signal. Optionally, the network device may be the serving satellite of the terminal device or the terrestrial device. The network device may broadcast the second measurement configuration information within coverage of one or more beams of the serving satellite. For example, the terminal device at bw#b in FIG. 8 may receive the foregoing second measurement configuration information. In addition, FIG. 8 further shows a terminal device at bw#6, and the terminal device at bw#6 may receive the second measurement configuration information.

In a specific implementation, the transmission resource for the second-type downlink reference signal is different from the transmission resource (for example, one or more of corresponding resources such as a time domain resource, a frequency domain resource, a polarization domain resource, a space domain resource, and a code domain resource) for the first-type downlink reference signal. Such a design can avoid a resource conflict between two types of cell handover, and also help the terminal device distinguish between the first-type downlink reference signal and the second-type downlink reference signal.

Optionally, the network device may further indicate, in the second measurement configuration information, that the second-type downlink reference signal is associated with the second access resource. Optionally, the second access resource may be a random access resource, which is denoted as RO. The second access resource is different from the foregoing first random access resource. For example, the periodicity of the HO-RO in the first access resource is also greater than a periodicity of the RO in the second access resource.

In addition, optionally, the network device may further configure, for the terminal device, a trigger condition for determining whether to perform cell handover. For example, the network device may determine conditional handover (conditional handover, CHO) information based on a layer 1 (L1)/layer 2 (L2) mobility management configuration. For example, the CHO information indicates to perform cell handover when a measurement result of measuring a reference signal by the terminal device meets a specified condition. It may be understood that the L1/L2 mobility management configuration is a management configuration of inter-cell mobility centered on L1/L2. In the L1/L2 mobility management configuration, a measurement result obtained by the terminal device by measuring the second-type downlink reference signal may include one or more of the following: reference signal power (reference signal received power, RSRP), reference signal quality (reference signal received quality, RSRQ), and a signal-to-interference-plus-noise ratio (signal-to-interference-plus-noise ratio, SINR) of a reference signal. The CHO information that can be configured by the network device for the terminal device may include thresholds (also referred to as threshold values) corresponding to measurement results. For example, the network device may configure an RSRP threshold for the RSRP, and the terminal device performs cell handover when determining that RSRP obtained by measuring the second-type downlink reference signal is greater than or equal to an RSRP threshold. For example, the network device may configure an RSRQ threshold for the RSRQ, and the terminal device performs cell handover when determining that RSRQ obtained by measuring the second-type downlink reference signal is greater than or equal to an RSRQ threshold. For another example, the network device may configure an SINR threshold for the SINR, and the terminal device performs cell handover when determining that SINR obtained by measuring the second-type downlink reference signal is greater than or equal to an SINR threshold.

Based on this, in a possible design, the network device may further indicate, in the second measurement configuration information, the foregoing CHO information corresponding to the L1/L2 mobility management configuration. For example, the second measurement configuration information may include one or more of the following: a second signal quality threshold (used to measure the RSRQ), a second signal power threshold (used to measure the RSRP), and a second signal-to-interference-plus-noise ratio threshold (used to measure the SINR) of a signal. It may be understood that the second signal quality threshold is the same as or different from the first signal quality threshold, the second signal power threshold is the same as or different from the first power quality threshold, and the second signal-to-interference-plus-noise ratio threshold of a signal is the same as or different from the first signal-to-interference-plus-noise ratio threshold of a signal. This is not limited in embodiments of this application.

It may be understood that a sequence of performing S701 and S702 is not limited in embodiments of this application.

Further, the terminal device may determine, based on position information of the terminal device, to perform the solutions or solution of step S703 and/or step S704. For example, when a beam position of the terminal device is included in a zone in which satellite movement triggers group handover, S703 may be performed. For another example, when the terminal device moves, S704 may be performed.

S703: The terminal device measures the first-type downlink reference signal based on first position information and the first measurement configuration information.

The first position information may indicate the beam position of the terminal device. For example, as shown in FIG. 8 or FIG. 9, the terminal device is at the beam position bw#b, and the beam position is included in a zone in which satellite movement triggers group handover.

In correspondence to the descriptions in S701, if one transmission resource for the first-type downlink reference signal is configured in the first measurement configuration information, the terminal device may measure the first-type downlink reference signal from a neighboring satellite based on measurement time that is in the first measurement configuration information and that corresponds to the first position information (beam position). For example, the terminal device at the beam position bw#b shown in FIG. 8 may measure a first-type downlink reference signal from SAT-L based on measurement time corresponding to bw#b.

If the first transmission resource and the second transmission resource for the first-type downlink reference signal are configured in the first measurement configuration information, the first transmission resource corresponds to the first cell group, and the second transmission resource corresponds to the second cell group, the terminal device may measure, within activation time of the first transmission resource, the first-type downlink reference signal from the first cell group based on measurement time that is in the first transmission resource and that corresponds to the first position information; or the terminal device may measure, within activation time of the second transmission resource, the first-type downlink reference signal from the second cell group based on measurement time that is in the second transmission resource and that corresponds to the first position information. For example, as shown in FIG. 9, at the time T2, a transmission resource corresponding to the cell group PCI-Y1 is in an active state. The terminal device at the beam position bw#b may measure a first-type downlink reference signal from PCI-Y1 based on measurement time that corresponds to bw#b and that is in the transmission resource corresponding to PCI-Y1. This may also be understood as measuring a first-type downlink reference signal that is delivered by SAT-K1 via PCI-Y1. At the time T5, a transmission resource corresponding to the cell group PCI-Y2 is in an active state. The terminal device at the beam position bw#b may measure a first-type downlink reference signal from PCI-Y2 based on measurement time that corresponds to bw#b and that is in the transmission resource corresponding to PCI-Y2. This may also be understood as measuring a first-type downlink reference signal that is delivered by SAT-M1 via PCI-Y2.

S704: The terminal device measures the second-type downlink reference signal based on second position information of the terminal device and the second measurement configuration information.

The second position information indicates a current geographical position of the terminal device, for example, may be implemented as GNSS position information.

In a possible design, if a distance between the second position information of the terminal device and a first reference position in a serving cell is greater than a first threshold, the terminal device measures the second-type downlink reference signal based on the second measurement configuration information. The first reference position may be a central point of the serving cell, or a central point of a serving beam position.

In another possible design, if a distance between the second position information of the terminal device and a first reference position in a serving cell is greater than a first threshold, and a distance between the second position information of the terminal device and a second reference position in a neighboring cell is less than a second threshold, the terminal device measures the second-type downlink reference signal based on the second measurement configuration information. The second reference position may be a central point of the neighboring cell.

Optionally, the network device may indicate one or more of the first reference position, the second reference position, the first threshold, and the second threshold in the second measurement configuration information. It may be understood that the first threshold and the second threshold may be the same or different. This is not limited in embodiments of this application.

S705: The terminal device determines, based on a measurement result, whether to perform cell handover. For example, when the terminal device performs S703, the measurement result includes signal quality of the first downlink reference signal. In a possible design, when determining that the signal quality of the first downlink reference signal is greater than or equal to the foregoing first signal quality threshold, the terminal device determines to perform cell handover. The cell handover is the group handover triggered by the satellite motion. In another possible design, the terminal device may report the signal quality of the first-type downlink reference signal to the network device. When determining that the signal quality of the first-type downlink reference signal is greater than or equal to the first signal quality threshold, the network device may trigger, by using L1/L2 control signaling, the terminal device to perform cell handover. Optionally, the L1/L2 control signaling may be a media access control-control element (media access control-control element, MAC-CE).

Further, the terminal device may access a target cell based on the first access resource described in S701. In a possible implementation, the network device may configure, for the terminal device through a physical downlink control channel (physical downlink control channel, PDCCH), the first access resource associated with the first-type downlink reference signal. Correspondingly, the terminal device may perform, by using a blind detection scrambling code, blind detection on the foregoing PDCHH on a control resource set CORESET associated with a received first-type downlink reference signal, to determine the first access resource. Optionally, the blind detection scrambling code may be a dedicated ID of the terminal device, for example, a radio network temporary identifier (radio network temporary identifier, RNTI), or a group-radio network temporary identifier (group-radio network temporary identifier, G-RNTI) corresponding to a geographical zone in which the terminal device is located. It may be understood that a plurality of terminal devices in a same geographical zone may perform blind detection by using a same G-RNTI.

For example, when the terminal device performs S704, the measurement result includes signal quality of the second downlink reference signal. In a possible design, when determining that the signal quality of the second downlink reference signal is greater than or equal to the foregoing second signal quality threshold, the terminal device determines to perform cell handover. The cell handover is the group handover triggered by the satellite motion. In another possible design, the terminal device may report the signal quality of the second-type downlink reference signal to the network device. When determining that the signal quality of the second-type downlink reference signal is greater than or equal to the second signal quality threshold, the network device may trigger, by using L1/L2 control signaling, the terminal device to perform cell handover. Optionally, the L1/L2 control signaling may be a media access control-control element (media access control-control element, MAC-CE).

Further, the terminal device may access a target cell based on the second access resource described in S701. In a possible implementation, the network device may configure, for the terminal device through a physical downlink control channel (physical downlink control channel, PDCCH), the second access resource associated with the second-type downlink reference signal. Correspondingly, the terminal device may perform, by using a blind detection scrambling code, blind detection on the foregoing PDCHH on a control resource set CORESET associated with a received second-type downlink reference signal, to determine the second access resource. Optionally, the blind detection scrambling code may be a dedicated ID of the terminal device, for example, a radio network temporary identifier (radio network temporary identifier, RNTI), or a group-radio network temporary identifier (group-radio network temporary identifier, G-RNTI) corresponding to a geographical zone in which the terminal device is located. It may be understood that a plurality of terminal devices in a same geographical zone may perform blind detection by using a same G-RNTI.

According to the foregoing method provided in this embodiment of this application, a dedicated reference signal measurement configuration is designed for group handover caused by satellite motion, so that the terminal device can flexibly and quickly determine to perform group handover or handover triggered by terminal device movement, to improve efficiency and a success rate of the handover.

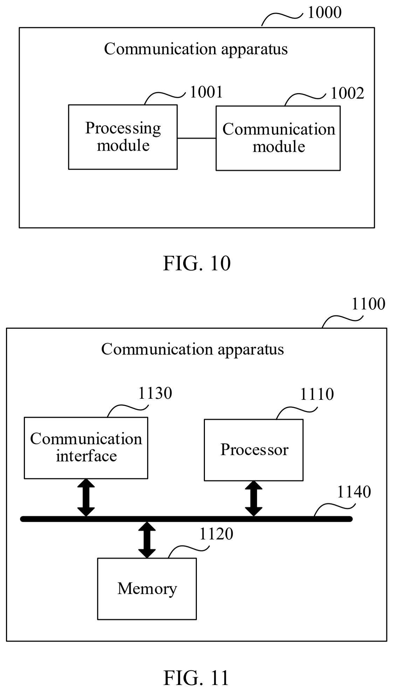

Based on a same idea, an embodiment of this application provides a communication apparatus 1000. Refer to FIG. 10. The communication apparatus 1000 includes a processing module 1001 and a communication module 1002. The communication apparatus 1000 may be a terminal device, or may be a communication apparatus that is used in a terminal device or that is used in a matching manner with a terminal device and that can implement the communication method performed on a terminal device side. Alternatively, the communication apparatus 1000 may be a network device, or may be a communication apparatus that is used in a network device or that is used in a matching manner with a network device and that can implement the communication method performed by the network device.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on the terminal device side or a network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in the example in FIG. 7, and the communication module 1002 may be configured to implement receiving and sending functions of the terminal device in the example in FIG. 7. Optionally, the communication apparatus may alternatively be understood with reference to the third aspect and the possible designs in the third aspect in the summary.

When the communication apparatus 1000 is used on the network device side, the processing module 1001 may be configured to implement a processing function of the network device in the example in FIG. 7, and the communication module 1002 may be configured to implement receiving and sending functions of the network device in the example in FIG. 7. Optionally, the communication apparatus may alternatively be understood with reference to the fourth aspect and the possible designs in the fourth aspect in the summary.

In addition, it should be noted that, in a possible design, the communication module and/or the processing module may be implemented by using a virtual module. For example, the processing module may be implemented by using a software functional unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

In this embodiment of this application, module division is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

Based on a same technical concept, an embodiment of this application further provides a communication apparatus 1100. For example, the communication apparatus 1100 may be a chip or a chip system. Optionally, in this embodiment of this application, the chip system may include a chip, or may include a chip and another discrete component.

The communication apparatus 1100 may be configured to implement functions of any network element in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of communication interface. When the communication apparatus 1100 is a chip-type apparatus or a circuit, the communication interface 1130 in the apparatus 1100 may be alternatively an input/output circuit, and may input information (or receive information) and output information (or send information). The processor is an integrated processor, a microprocessor, an integrated circuit, or a logic circuit. The processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in embodiments of this application.

Optionally, refer to FIG. 11. The processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in embodiments of this application. The general-purpose processor may be a microprocessor or any conventional processor or the like. The steps of the method in embodiments of this application may be directly completed by a hardware processor, or may be completed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

In a possible implementation, the communication apparatus 1100 may be used in a terminal device. Specifically, the communication apparatus 1100 may be the terminal device, or may be an apparatus that can support the terminal device in implementing functions of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. For example, when the communication apparatus is used in the terminal device, the communication interface in the communication apparatus 1100 may be configured to interact with a network device, and send information to the network device or receive information from the network device.

In another possible implementation, the communication apparatus 1100 may be used in a network device. Specifically, the communication apparatus 1100 may be the network device, or may be an apparatus that can support the network device in implementing functions of the network device in any one of the foregoing examples. The memory 1120 stores a computer program (or instructions) and/or data for implementing the functions of the network device in any one of the foregoing examples. The processor 1110 may execute the computer program stored in the memory 1120, to complete the method performed by the network device in any one of the foregoing examples. For example, when the communication apparatus is used in the network device, the communication interface in the communication apparatus 1100 may be configured to interact with a terminal device, and send information to the terminal device or receive information from the terminal device.

The communication apparatus 1100 provided in this example may be used in the network device to complete the method performed by the cell on the network device side, or may be used in the terminal device to complete the method performed by the terminal device. Therefore, for technical effects that can be achieved by the communication apparatus 1100, refer to the foregoing method examples. Details are not described herein again.

All or a part of the technical solutions provided in embodiments of this application may be implemented through software, hardware, firmware, or any combination thereof. When the software is used to implement the solutions, all or a part of the solutions may be implemented in a form of a computer program product. The computer program product includes one or more computer instructions. When the computer program instructions are loaded and executed on the computer, all or a part of the procedure or functions according to embodiments of this application are generated. The computer may be a general-purpose computer, a special-purpose computer, a computer network, a terminal device, a network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In embodiments of this application, on the premise that there is no logical contradiction, the examples may be mutually referenced. For example, the methods and/or the terms in the method embodiments may be mutually referenced. For example, the functions and/or the terms in the apparatus embodiments may be mutually referenced. For example, the functions and/or the terms between the apparatus example and the method example may be mutually referenced.

It is clear that, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A handover method, comprising:
obtaining first measurement configuration information and second measurement configuration information, wherein the first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover;
measuring the first-type downlink reference signal based on first position information and the first measurement configuration information; and/or measuring the second-type downlink reference signal based on second position information and the second measurement configuration information, to obtain a measurement result; and
determining, based on the measurement result, whether to perform cell handover.

2. The method according to claim 1, wherein the first-type downlink reference signal is used for cell handover triggered by network device motion, and the second-type downlink reference signal is used for cell handover triggered by a terminal device.

3. The method according to claim 1 or 2, wherein measuring the first-type downlink reference signal based on the first position information and the first measurement configuration information comprises:
measuring the first-type downlink reference signal from a target network device based on measurement time that is in the first measurement configuration information and that corresponds to the first position information.

4. The method according to any one of claims 1 to 3, wherein the first measurement configuration information is used to configure a plurality of transmission resources for the first-type downlink reference signal, and activation time of at least two of the plurality of transmission resources for the first-type downlink reference signal is different.

5. The method according to claim 4, wherein the plurality of transmission resources for the first-type downlink reference signal comprise a first transmission resource corresponding to a first cell group and a second transmission resource corresponding to a second cell group, and measuring the first-type downlink reference signal based on the first position information and the first measurement configuration information comprises:
measuring, within activation time of the first transmission resource, the first-type downlink reference signal from the first cell group based on measurement time that is in the first transmission resource and that corresponds to the first position information; or
measuring, within activation time of the second transmission resource, the first-type downlink reference signal from the second cell group based on measurement time that is in the second transmission resource and that corresponds to the first position information.

6. The method according to any one of claims 1 to 5, wherein the first measurement configuration information is used to configure a first signal quality threshold, and the first signal quality threshold is determined based on an L1/L2 mobility management configuration of the terminal device; and
determining, based on the measurement result, whether to perform cell handover comprises:
determining to perform cell handover, if signal quality of the first downlink reference signal comprised in the measurement result is greater than or equal to the first signal quality threshold.

7. The method according to any one of claims 1 to 6, wherein measuring the second-type downlink reference signal based on the second position information and the second measurement configuration information comprises:
measuring the second-type downlink reference signal based on the second measurement configuration information when a distance between the second position information and a first reference position in a serving cell is greater than a first threshold; and/or
measuring the second-type downlink reference signal based on the second measurement configuration information when a distance between the second position information and a second reference position in a neighboring cell is less than a second threshold.

8. The method according to claim 7, wherein the second measurement configuration information is further used to configure one or more of the following: the first reference position, the first threshold, the second reference position, and the second threshold.

9. The method according to any one of claims 1 to 8, wherein one transmission resource for the first-type downlink reference signal comprises one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

10. The method according to any one of claims 1 to 9, wherein the first measurement configuration information is used to configure a first access resource associated with the first-type downlink reference signal, and the first access resource is different from a second access resource associated with the second-type downlink reference signal.

11. A handover method, comprising:
determining first measurement configuration information and second measurement configuration information, wherein the first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover; and
sending the first measurement configuration information and the second measurement configuration information.

12. The method according to claim 11, wherein the first-type downlink reference signal is used for cell handover triggered by network device motion, and the second-type downlink reference signal is used for cell handover triggered by a terminal device.

13. The method according to claim 11 or 12, wherein the first measurement configuration information comprises measurement time corresponding to first position information.

14. The method according to any one of claims 11 to 13, wherein the first measurement configuration information is used to configure a plurality of transmission resources for the first-type downlink reference signal, and activation time of at least two of the plurality of transmission resources for the first-type downlink reference signal is different.

15. The method according to claim 14, wherein the plurality of transmission resources for the first-type downlink reference signal comprise a first transmission resource corresponding to a first cell group and a second transmission resource corresponding to a second cell group, wherein the first transmission resource is different from the second transmission resource, the first transmission resource comprises measurement time corresponding to the first position information, and the second transmission resource comprises measurement time corresponding to the first position information.

16. The method according to any one of claims 11 to 15, wherein the first measurement configuration information is used to configure a first signal quality threshold, the first signal quality threshold is determined based on an L1/L2 mobility management configuration of the terminal device, and the first signal quality threshold is used by the terminal device to determine whether to perform cell handover.

17. The method according to any one of claims 11 to 16, wherein the second measurement configuration information is used to configure one or more of the following parameters: a first reference position in a serving cell, a first threshold, a second reference position in a neighboring cell, and a second threshold, wherein the one or more parameters configured by using the second measurement configuration information is used by the terminal device to determine whether to measure the second-type downlink reference signal.

18. The method according to any one of claims 11 to 17, wherein one transmission resource for the first-type downlink reference signal comprises one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

19. The method according to any one of claims 11 to 18, wherein the first measurement configuration information is used to configure a first access resource associated with the first-type downlink reference signal, and the first access resource is different from a second access resource associated with the second-type downlink reference signal.

20. A communication apparatus, comprising a communication module and a processing module, wherein
the communication module is configured to obtain first measurement configuration information and second measurement configuration information, wherein the first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover; and
the processing module is configured to:
measure the first-type downlink reference signal based on first position information and the first measurement configuration information; and/or measure the second-type downlink reference signal based on second position information and the second measurement configuration information, to obtain a measurement result; and
determine, based on the measurement result, whether to perform cell handover.

21. The apparatus according to claim 20, wherein the first-type downlink reference signal is used for cell handover triggered by network device motion, and the second-type downlink reference signal is used for cell handover triggered by a terminal device.

22. The apparatus according to claim 20 or 21, wherein the processing module is specifically configured to:
measure the first-type downlink reference signal from a target network device based on measurement time that is in the first measurement configuration information and that corresponds to the first position information.

23. The apparatus according to any one of claims 20 to 22, wherein the first measurement configuration information is used to configure a plurality of transmission resources for the first-type downlink reference signal, and activation time of at least two of the plurality of transmission resources for the first-type downlink reference signal is different.

24. The apparatus according to claim 23, wherein the plurality of transmission resources for the first-type downlink reference signal comprise a first transmission resource corresponding to a first cell group and a second transmission resource corresponding to a second cell group, and the processing module is specifically configured to:
measure, within activation time of the first transmission resource, the first-type downlink reference signal from the first cell group based on measurement time that is in the first transmission resource and that corresponds to the first position information; or
measure, within activation time of the second transmission resource, the first-type downlink reference signal from the second cell group based on measurement time that is in the second transmission resource and that corresponds to the first position information.

25. The apparatus according to any one of claims 20 to 24, wherein the first measurement configuration information is used to configure a first signal quality threshold, and the first signal quality threshold is determined based on an L1/L2 mobility management configuration of the terminal device; and
the processing module is specifically configured to:
determine to perform cell handover, if signal quality of the first downlink reference signal comprised in the measurement result is greater than or equal to the first signal quality threshold.

26. The apparatus according to any one of claims 20 to 25, wherein the processing module is specifically configured to:
measure the second-type downlink reference signal based on the second measurement configuration information when a distance between the second position information and a first reference position in a serving cell is greater than a first threshold; and/or
measure the second-type downlink reference signal based on the second measurement configuration information when a distance between the second position information and a second reference position in a neighboring cell is less than a second threshold.

27. The apparatus according to claim 26, wherein the second measurement configuration information is further used to configure one or more of the following: the first reference position, the first threshold, the second reference position, and the second threshold.

28. The apparatus according to any one of claims 20 to 27, wherein one transmission resource for the first-type downlink reference signal comprises one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

29. The apparatus according to any one of claims 20 to 28, wherein the first measurement configuration information is used to configure a first access resource associated with the first-type downlink reference signal, and the first access resource is different from a second access resource associated with the second-type downlink reference signal.

30. A communication apparatus, comprising a processing module and a communication module, wherein
the processing module is configured to determine first measurement configuration information and second measurement configuration information, wherein the first measurement configuration information is used to configure a transmission resource for a first-type downlink reference signal, the second measurement configuration information is used to configure a transmission resource for a second-type downlink reference signal, and the first-type downlink reference signal and the second-type downlink reference signal are used for cell handover; and
the communication module is configured to send the first measurement configuration information and the second measurement configuration information.

31. The apparatus according to claim 30, wherein the first-type downlink reference signal is used for cell handover triggered by network device motion, and the second-type downlink reference signal is used for cell handover triggered by a terminal device.

32. The apparatus according to claim 30 or 31, wherein the first measurement configuration information comprises measurement time corresponding to first position information.

33. The apparatus according to any one of claims 30 to 32, wherein the first measurement configuration information is used to configure a plurality of transmission resources for the first-type downlink reference signal, and activation time of at least two of the plurality of transmission resources for the first-type downlink reference signal is different.

34. The apparatus according to claim 33, wherein the plurality of transmission resources for the first-type downlink reference signal comprise a first transmission resource corresponding to a first cell group and a second transmission resource corresponding to a second cell group, wherein the first transmission resource is different from the second transmission resource, the first transmission resource comprises measurement time corresponding to the first position information, and the second transmission resource comprises measurement time corresponding to the first position information.

35. The apparatus according to any one of claims 30 to 34, wherein the first measurement configuration information is used to configure a first signal quality threshold, the first signal quality threshold is determined based on an L1/L2 mobility management configuration of the terminal device, and the first signal quality threshold is used by the terminal device to determine whether to perform cell handover.

36. The apparatus according to any one of claims 30 to 35, wherein the second measurement configuration information is used to configure one or more of the following parameters: a first reference position in a serving cell, a first threshold, a second reference position in a neighboring cell, and a second threshold, wherein the one or more parameters configured by using the second measurement configuration information is used by the terminal device to determine whether to measure the second-type downlink reference signal.

37. The apparatus according to any one of claims 30 to 36, wherein one transmission resource for the first-type downlink reference signal comprises one or more of the following: a time domain resource corresponding to the first-type downlink reference signal, a transmission periodicity of the first-type downlink reference signal, a sequence corresponding to the first-type downlink reference signal, a polarization mode corresponding to the first-type downlink reference signal, a frequency domain resource corresponding to the first-type downlink reference signal, a beam identifier corresponding to the first-type downlink reference signal, a receive window corresponding to the first-type downlink reference signal, and a receive window offset corresponding to the first-type downlink reference signal.

38. The apparatus according to any one of claims 30 to 37, wherein the first measurement configuration information is used to configure a first access resource associated with the first-type downlink reference signal, and the first access resource is different from a second access resource associated with the second-type downlink reference signal.

39. A communication apparatus, comprising:
a processor, wherein the processor is coupled to a memory, and the processor is configured to invoke computer program instructions stored in the memory, to perform the method according to any one of claims 1 to 10, or perform the method according to any one of claims 11 to 19.

40. A communication system, comprising:
a terminal device, configured to implement the method according to any one of claims 1 to 10; and
a network device, configured to implement the method according to any one of claims 11 to 19.

41. A computer-readable storage medium, wherein the computer-readable storage medium stores instructions, and when the instructions are run on a computer, the computer is caused to perform the method according to any one of claims 1 to 19.

42. A chip, wherein the chip is coupled to a memory, and the chip reads a computer program stored in the memory, to perform the method according to any one of claims 1 to 19.

43. A computer program product, wherein the computer program product comprises computer program code, and when the computer program code is run, the method according to any one of claims 1 to 19 is implemented.
